# DEMANDE DE BREVET EUROPEEN

(11) **EP 0 898 101 A1**
(43) Date de publication de la demande: **24.02.1999**
(21) Numéro de dépôt: 98401864.8
(22) Date de dépôt: 22.07.1998
(51) Int. Cl.: F16K 15/20, F16K 17/02, B60C 29/00

(54) **Valve de sécurité en caoutchouc pour jante de roue comportant un pneu sans chambre à air**

(30) Priorité: 23.07.1997 FR 9709342
(71) Demandeur: Caujolle, Christian, 31150 Gratentour (FR)
(72) Inventeur: Caujolle, Christian, 31150 Gratentour (FR)
(74) Mandataire: Hammond, William

(57) **Abrégé**

Valve de sécurité (1) en caoutchouc pour jante de roue comportant un pneumatique sans chambre à air. Celle-ci comprend une tête cylindrique (2), un corps (3) en tronc de cône reposant sur cette tête par l'intermédiaire d'un socle (4) cylindrique ayant un diamètre inférieur à celui de la tête et de la base du corps, le sommet du corps étant prolongé par une tige (5).

Application notamment dans le domaine de l'automobile.

## Description

La présente invention est relative à une valve de sécurité en caoutchouc pour jante de roue comportant un pneu sans chambre à air.

Une roue notamment pour véhicule automobile comprend une jante en matériau plastique ou en tole sur laquelle est disposé un pneumatique comportant ou non une chambre à air.

Actuellement, un certain nombre d'incidents ou accidents se produisent lors du gonflage d'une roue, dont le pneumatique ne comporte pas de chambre à air. En effet, l'utilisation de compresseur permet de gonfler en deux ou trois secondes de tels pneus sans chambre à air : il n'est pas étonnant que des jantes éclatent par suite d'un surgonflage intempestif du au grand volume d'air des compresseurs et aux faibles volumes d'air des roues. Les jantes sont vendues pour une pression maximale de 1,5 x 10⁵ pascals (1,5 bar) et cassent pour des pressions comprises entre 7,5 x 10⁵ pascals (7,5 bars) ou 10⁶ pascals (10 bars) : ces valeurs de pression sont vite atteintes lors d'un gonflage avec un compresseur.

Il faut noter que l'éclatement d'une jante qu'elle soit en un matériau plastique ou en tôle, constitue un danger pour les personnes aux alentours par suite de la projection de petits éléments pouvant causer des blessures importantes.

Ainsi, un des buts de la présente invention est-il de fournir une valve de sécurité qui permet d'éviter un éclatement accidentel de la jante ou du pneu.

Un autre but de la présente invention est de fournir une telle valve qui peut être adaptée sur tout type de jante actuellement commercialisée.

Un but supplémentaire de l'invention est de fournir une telle valve de sécurité dont le déclenchement soit infaillible.

Ces buts, ainsi que d'autres qui apparaîtront par la suite, sont atteints par une valve de sécurité en caoutchouc pour jante de roue comportant un pneumatique sans chambre à air qui est caractérisée, selon la présente invention, par le fait qu'elle comprend une tête cylindrique, un corps en tronc de cône reposant sur cette tête par l'intermédiaire d'un socle cylindrique ayant un diamètre inférieur à celui de la tête et de la base du corps, le sommet du corps étant prolongé par une tige.

La description qui va suivre et qui ne présente aucun caractère limitatif doit être lue en regard des figures annexées parmi lesquelles :

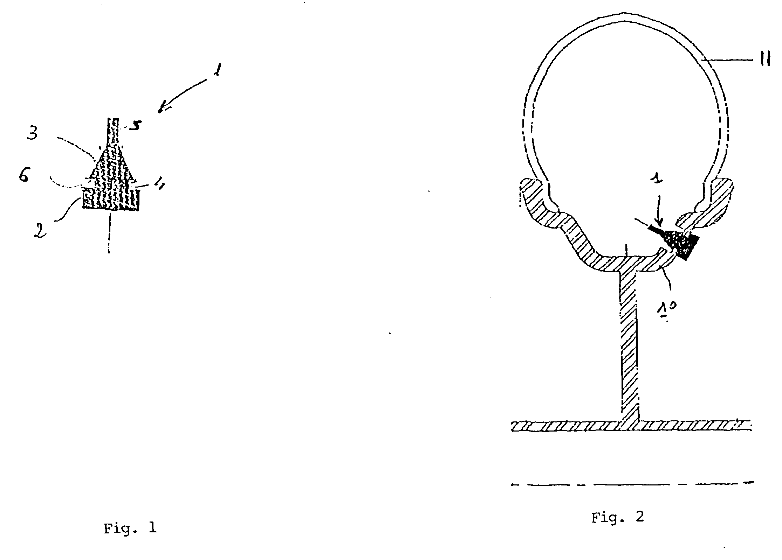

- la figure 1 représente une vue en coupe d'une valve de sécurité selon la présente invention ; et,
- la figure 2 représente en demi-coupe longitudinale une jante équipée de cette valve de sécurité.

Ainsi qu'on peut voir sur ces figures, une valve de sécurité désignée dans son ensemble par la référence 1, comporte d'une part, une tête cylindrique 2 et, d'autre part, un corps 3 ayant la forme d'un tronc de cône.

Ce corps 3 repose sur la tête 2 par l'intermédiaire d'un socle 4 cylindrique dont le diamètre est inférieur à ceux de la tête 2 et de la base du corps 3. De plus, le diamètre de la tête 2 est au moins égal à celui de la base du corps 3.

Le sommet du corps 3 est prolongé par une tige 5 de préférence cylindrique : cette tige a notamment pour but de permettre la préhension de la valve 1.

Cette valve 1 est mise en place sur une jante 10 dans un orifice pratiqué dans celle-ci soit au voisinage de la valve de gonflage soit à son opposé. Le diamètre de cet orifice est sensiblement égal à celui du socle 4. La mise en place de cette valve de sécurité 1 se fait à force. L'étanchéité est assurée par l'appui de la base 6 du tronc de cône constituant le corps 3 sur la paroi correspondante de la jante 10.

Lorsqu'il y a surpression à l'intérieur du pneu 11, celle-ci exerce des pressions sur le corps 3 conduisant à l'expulsion de la valve 1 hors de la jante 10.

Par un choix judicieux, d'une part, du matériau dans lequel est réalisé cette valve de sécurité et, d'autre part, des côtés de ses différentes parties, on peut réaliser des valves tarées à différentes pressions.

## Revendications

1. Valve de sécurité (1) en caoutchouc pour jante de roue comportant un pneumatique sans chambre à air, caractérisée par le fait qu'elle comprend une tête cylindrique (2), un corps (3) en tronc de cône reposant sur cette tête par l'intermédiaire d'un socle (4) cylindrique ayant un diamètre inférieur à celui de la tête et de la base du corps, le sommet du corps étant prolongé par une tige (5).

2. Valve de sécurité selon la revendication 1, caractérisée par le fait que l'angle au sommet du corps (3) est compris entre 25 et 40°.

3. Valve de sécurité selon la revendication 1 caractérisée par le fait que le diamètre du socle (4) est environ la moitié de celui de la tête (2).

4. Valve de sécurité selon la revendication 1, caractérisée par le fait que le rapport entre le diamère de la base du corps (3) et celui de la tête (2) est compris entre 2:3 et 1:2.
